# EUROPÄISCHE PATENTSCHRIFT

(11) **EP 3 704 631 B1**
(45) Veröffentlichungstag und Bekanntmachung des Hinweises auf die Patenterteilung: **12.08.2026**
(21) Anmeldenummer: 19709382.6
(22) Anmeldetag: 20.02.2019
(51) Int. Cl.: G06V 20/58, G06T 7/73, G01C 3/12, G01C 11/04, G06T 7/529, G06T 7/536

(54) **VERFAHREN ZUR ERMITTLUNG EINER ENTFERNUNG ZWISCHEN EINEM KRAFTFAHRZEUG UND EINEM OBJEKT**
METHOD FOR DETERMINING A DISTANCE BETWEEN A MOTOR VEHICLE AND AN OBJECT
PROCÉDÉ DE CALCUL D'UN ÉLOIGNEMENT ENTRE UN VÉHICULE AUTOMOBILE ET UN OBJET

(30) Priorität: 23.02.2018 DE 102018202753
(43) Veröffentlichungstag der Anmeldung: 09.09.2020
(73) Patentinhaber: Audi AG, 85045 Ingolstadt (DE)
(72) Erfinder: TAFT, Gordon, 85055 Ingolstadt (DE); SAVANI, Chiragkumar, 85049 Ingolstadt (DE)
(74) Vertreter: Herbst, Matthias Heinz
(86) Internationale Anmeldenummer: PCT/EP2019/054216
(87) Internationale Veröffentlichungsnummer: WO 2019/162327

(56) Entgegenhaltungen:
- WO-A1-2017/090410
- US-A1- 2012 262 580
- US-A1- 2018 281 757
- SHERRAH JAMIE ED - MARTIN ATZMUELLER ET AL: "Learning to Adapt: A Method for Automatic Tuning of Algorithm Parameters", 13 December 2010, ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 414 - 4, ISBN: 978-3-642-17318-9, XP047428635
- EGMONT-PETERSEN M ET AL: "Image processing with neural networks-a review", PATTERN RECOGNITION, ELSEVIER, GB, vol. 35, no. 10, October 2002 (2002-10-01), pages 2279 - 2301, XP004366785, ISSN: 0031-3203, DOI: 10.1016/S0031-3203(01)00178-9

## Beschreibung

Die Erfindung betrifft ein Verfahren zur Ermittlung einer Entfernung zwischen einem Kraftfahrzeug und wenigstens einem Objekt. Daneben betrifft die Erfindung ein Kraftfahrzeug.

In Fahrzeugen ist es vorteilhaft, Entfernungen zu anderen Objekten, beispielsweise zu vorausfahrenden Kraftfahrzeugen oder Fußgängern, zu ermitteln, um entsprechende Informationen an einen Fahrer bereitzustellen und/oder im Rahmen von Fahrerassistenzsystemen zu nutzen. Beispielsweise kann durch einen Abstandstempomaten ein Abstand zu einem voranfahrenden Kraftfahrzeug geregelt werden oder Kollisionsvermeidungssysteme können Abstandsinformationen nutzen, um bei einer Unterschreitung von Abstandsgrenzen beispielsweise Fahreingriffe durchzuführen oder Warnsignale auszugeben.

Abstände zu anderen Objekten können beispielsweise mit Hilfe von Radar- oder Ultraschallsensoren erfasst werden. Sollen jedoch auch Abstände für Objekte in großen Entfernungen erfasst werden, so kann beispielsweise bei einer Erfassung über Radarsensoren eine aufwändige Sensorausstattung erforderlich sein bzw. Abstandsinformationen können nur in einem relativ kleinen Raumwinkelbereich erfasst werden.

Alternativ oder ergänzend hierzu können verschiedene Ansätze zur Entfernungserfassung mit Hilfe von Kameras genutzt werden. So ist es aus der Druckschrift DE 10 2009 009 047 A1 bekannt, eine Stereobildverarbeitung zu nutzen, um eine Tiefenkarte der Umgebung zu bestimmen, um hieraus eine Entfernung und eine Position eines Fußpunkts eines Objekts zu ermitteln. Auf Stereobildverarbeitung basierende Verfahren zur Entfernungsermittlung erreichen jedoch typischerweise nur für relativ geringe Entfernung eine ausreichende Genauigkeit.

Ein anderer Ansatz ist es, bekannte Abmessungen anderer Kraftfahrzeuge zu nutzen, um aus zweidimensionalen Bilddaten eine Entfernung zu ermitteln. Die Druckschrift DE 10 2011 055 441 A1 schlägt hierbei vor, ein Fahrzeugkennzeichen eines Fahrzeugs zu erfassen. Da Fahrzeugkennzeichen eine vorgeschriebene Größe aufweisen können, kann anhand der erfassten Abmessungen ein Abstand zu dem Fahrzeug abgeschätzt werden. Ein ähnliches Vorgehen ist auch aus der DE 10 2006 012 914 A1 bekannt. Dort werden horizontale und vertikale Kanten in einem Abbild der Rückseite eines vorausfahrenden Kraftfahrzeugs erkannt. In Abhängigkeit der Lage einer horizontalen Kante und des Abstands zwischen den vertikalen Kanten wird ein Abstand ermittelt. Nachteilig an diesen Ansätzen zur Ermittlung von Abständen ist, dass Informationen über die tatsächliche Breite eines erfassten Objekts bzw. über andere definierte Abmessungen erforderlich sind, um eine robuste Abstandsermittlung zu ermöglichen. Somit sind die geschilderten Verfahren typischerweise nicht für alle relevanten Objekte nutzbar und es ist eine potentielle umfangreiche Objektdatenbank erforderlich.

Die Druckschrift US 2012 / 262580 A1 offenbart ein Surround-View-System, das eine Rundumsicht aus einem Fahrzeug heraus über Kameras bereitstellen kann, die an verschiedenen Stellen am Fahrzeug angebracht sind.

Der Artikel Egmont-Petersen, M. et al., "Image processing with neural networks-a review", Pattern Recognition, Elsevier, GB, vol. 35, no. 10, October 2002 (2002-10-01), Seiten 2279 - 2301, XP004366785, ISSN: 0031-3203, DOI: 10.1016/S0031-3203(01)00178-9, diskutiert diverse Verfahren zur Bildverarbeitung durch neuronale Netze.

Der Artikel Sherrah, J.,. "Learning to Adapt: A Method for Automatic Tuning of Algorithm Parameters", Advanced Concepts for Intelligent Vision Systems. ACIVS 2010, Lecture Notes in Computer Science, vol 6474. Springer, Berlin, Heidelberg. https://doi.org/10.1007/978-3-642-17688-3 39, offenbart ein Verfahren, um Parameter von Bildverarbeitungsalgorithmen automatisiert anzupassen.

Die Druckschrift WO 2017 / 090410 A1 offenbart einen Ansatz zur Bestimmung einer Objektentfernung, bei dem eine Stereokamera genutzt wird, um Entfernungen von Punkten in einem Überlappungsbereich zu ermitteln. Die Entfernung eines Objekts außerhalb des Überlappungsbereichs der Kameras kann ermittelt werden, indem ein Bildpunkt auf der gleichen Höhe im Bild gewählt wird, der im Überlappungsbereich liegt, und für diesen Bildpunkt die Entfernung anhand einer Parallaxenverschiebung in den Bilddaten der beiden Kameras ausgewertet wird. Um auch Höhenänderungen außerhalb des Überlappungsbereichs der Kameras zu erfassen, können zusätzlich zeitlich vorangehend erfasste Bilddaten ausgewertet werden.

Der Erfindung liegt somit die Aufgabe zugrunde, ein demgegenüber verbessertes Verfahren zur Ermittlung einer Entfernung zwischen einem Kraftfahrzeug und wenigstens einem Objekt anzugeben, das es insbesondere ermöglicht, auch mit einfacher Sensorausstattung des Kraftfahrzeugs Entfernungen zu Objekten, zu denen keine oder wenige Zusatzinformationen vorhanden sind, zu ermitteln.

Die Aufgabe wird erfindungsgemäß durch ein Verfahren zur Ermittlung einer Entfernung zwischen einem Kraftfahrzeug und wenigstens einem Objekt, wobei genau ein Kamerabild genau einer Kamera verwendet wird, gelöst, das die folgenden Schritte umfasst:
- Erfassen eines zweidimensionalen Kamerabildes durch eine Kamera des Kraftfahrzeugs,
- Segmentieren des Kamerabildes, wobei jene Bildpunkte, die das Objekt abbilden, als Objektsegment ermittelt werden,
- Ermitteln eines Aufstandspunkts des Objekts auf einem Untergrund in Abhängigkeit des Objektsegments,
- Ermitteln der Entfernung zwischen Objekt und Kraftfahrzeug in Abhängigkeit des Aufstandspunkts und einer Erfassungsgeometrie der Kamera,
wobei durch einen Verarbeitungsalgorithmus aus den segmentierten Bilddaten des Kamerabildes ein Untergrundmodell generiert wird, das einen Höhenverlauf zumindest innerhalb eines Untergrundsegments betrifft, das Bildpunkte umfasst, die den Untergrund des Objekts abbilden, wobei der Aufstandspunkt und/oder die Entfernung in Abhängigkeit des Untergrundmodells ermittelt wird, wobei das Untergrundmodell mehrere Untergrundebenen beschreibt, wobei der Verarbeitungsalgorithmus durch mehrere Verarbeitungsparameter parametrisiert wird oder ist, die durch ein Verfahren des Maschinenlernens ermittelt werden oder sind.

Erfindungsgemäß wird vorgeschlagen, jene Bildpunkte, die das Objekt abbilden, zu ermitteln, also insbesondere eine pixelgenaue Segmentierung durchzuführen. Dies kann, wie später noch detailliert erläutert werden wird, insbesondere mit Hilfe eines Segmentierungsalgorithmus erfolgen, der durch Maschinenlernen trainiert wurde. Eine pixelgenaue Segmentierung des Bildes ermöglicht es insbesondere, den Aufstandspunkt des Objekts auf einem Untergrund mit hoher Genauigkeit zu bestimmen. Im einfachsten Fall kann anschließend davon ausgegangen werden, dass das Fahrzeug auf einer Ebene fährt, auf der sich auch das Objekt befindet. In diesem Fall kann ein bestimmter Bildpunkt und somit ein dem Bildpunkt über die Erfassungsgeometrie der Kamera zugeordnetes Raumwinkelsegment für den Aufstandspunkt einer definierten Entfernung zugeordnet werden. Vorzugsweise wird im erfindungsgemäßen Verfahren die Lage der Kamera und somit insbesondere des Kraftfahrzeugs, beispielsweise ein Wank- und/oder ein Nickwinkel, berücksichtigt. Wie später noch detailliert erläutert werden wird, ist es zudem möglich, von der Annahme eines ebenen Untergrunds abzuweichen, da es im Rahmen der Auswertung des Kamerabildes mit hoher Robustheit möglich sein kann, die Topographie bzw. den Höhenverlauf des Untergrunds zumindest näherungsweise zu ermitteln.

Im erfindungsgemäßen Verfahren wird genau ein Kamerabild genau einer Kamera genutzt. Das erfindungsgemäße Verfahren ist somit mit geringem sensorischen Aufwand durchführbar.

Das Segmentieren des Kamerabildes kann durch eine Klassifikation der einzelnen Bildpunkte erfolgen, wobei für jeden Bildpunkt bestimmt werden kann, ob dieser einem bzw. einem jeweiligen Objekt oder einem Hintergrund, insbesondere einem Untergrund, zugeordnet ist. Als Aufstandspunkt kann im einfachsten Fall der niedrigste Punkt eines jeweiligen Objekts gewählt werden. Im erfindungsgemäßen Verfahren können jedoch auch teilweise Verdeckungen von Objekten durch weitere Objekte erkennbar sein, womit Fehlbestimmungen von Entfernungen vermieden bzw. verringert werden können.

Bei Nutzung des erfindungsgemäßen Verfahrens kann es möglich sein, dass die Entfernungsauflösung im Wesentlichen durch die Pixelauflösung der Kamera begrenzt wird. Somit können auch hohe Genauigkeiten für weit entfernte Objekte erreicht werden.

Die ermittelte Entfernung zwischen Objekt und Kraftfahrzeug kann beispielsweise genutzt werden, um eine Fahrzeugeinrichtung in Abhängigkeit dieser Entfernung zu steuern, um in den Fahrbetrieb einzugreifen und/oder eine Fahrerinformation auszugeben. Beispielsweise können in Abhängigkeit der ermittelten Entfernung automatische Bremseingriffe erfolgen und/oder es können Warnhinweise ausgegeben werden.

Das Kamerabild kann durch einen weiteren Verarbeitungsalgorithmus segmentiert werden, der durch mehrere Verarbeitungsparameter parametrisiert wird oder ist, die durch ein Verfahren des Maschinenlernens ermittelt werden oder sind. Beispielsweise kann ein neuronales Netz als der Verarbeitungsalgorithmus und/oder ein neuronales Netz als der weitere Verarbeitungsalgorithmus genutzt werden. Die Verarbeitungsparameter wirken somit als kognitives Gedächtnis des trainierten Verarbeitungsalgorithmus. Ein großer Vorteil der Nutzung von Verfahren des Maschinenlernens ist es, dass es nicht erforderlich ist, manuell bestimmte Verarbeitungsregeln vorzugeben, um eine Segmentierung durchzuführen. Verfahren des Maschinenlernens, insbesondere neuronale Netzwerke, können im Rahmen der Bildverarbeitung ähnliche Ergebnisse erzielen, wie das menschliche Gehirn. Hierbei ist es bekannt, dass menschliche Betrachter auch in zweidimensionalen Bildern Objektgrenzen typischerweise pixelgenau erkennen können. Hierbei können neben lokalen Merkmalen wie Kanten auch relative Größen, Verdeckungen, Schattenwürfe und Ähnliches berücksichtigt werden. Diese Fähigkeit kann auch dem Verarbeitungsalgorithmus antrainiert werden.

Die Verarbeitungsparameter können insbesondere mit Hilfe eines überwachten Lernens ermittelt werden. Hierzu können Trainingsdatensätze vorgegeben werden, in denen bereits eine Segmentierung des Bildes erfolgt ist. Die Segmentierung der Bilder der Trainingsdatensätze kann beispielsweise manuell erfolgen. Es ist auch möglich, dass eine automatische Segmentierung erfolgt, wobei Zusatzinformationen, beispielsweise Entfernungsinformationen, die über einen Radar- oder Lidarsensor oder Ähnliches ermittelt wurden, genutzt werden. Die Segmentierung durch den Verarbeitungsalgorithmus kann insbesondere derart erfolgen, dass für einzelne Pixel eine Klassifizierungsinformation ermittelt wird, die angibt, ob der jeweilige Pixel zu einem Objekt oder zum Bildhintergrund gehört. Bezüglich des Bildhintergrunds kann im Rahmen der Klassifizierung zusätzlich zwischen dem Untergrund und anderen Teilen des Bildhintergrunds unterschieden werden. Werden mehrere Objekte abgebildet, kann für den einzelnen Pixel auch ermittelt werden, zu welchem der Objekte er gehört.

Ansätze zum insbesondere überwachten Lernen durch Algorithmen des Maschinenlernens sind im Stand der Technik grundsätzlich bekannt und sollen daher nicht detailliert erläutert werden. Insbesondere kann eine Fehlerrückführung bzw. eine "Backpropagation of Error" verwendet werden. Allgemein können Gradientenverfahren genutzt werden, bei denen eine Ableitung einer Kostenfunktion bzw. eines Maßes für eine Abweichung im Rahmen des Lernens bezüglich der Verarbeitungsparameter berechnet wird, um eine Variationsrichtung für die Verarbeitungsparameter zu ermitteln.

Wird ein neuronales Netz als Verarbeitungsalgorithmus genutzt, können die Verarbeitungsparameter beispielsweise die in den einzelnen Neuronen genutzten Gewichte sein. Als neuronales Netz kann beispielsweise ein Convolutional Neural Network oder Ähnliches verwendet werden.

In Abhängigkeit der Bilddaten des Kamerabildes wird ein Untergrundmodell generiert, das einen Höhenverlauf zumindest innerhalb eines Untergrundsegments betrifft, das Bildpunkte umfasst, die den Untergrund des Objekts abbilden, wobei der Aufstandspunkt und/oder die Entfernung in Abhängigkeit des Untergrundmodells ermittelt werden. Insbesondere kann ein Höhenverlauf für mehrere separate Untergrundsegmente ermittelt werden. Beispielsweise kann jener Teil der Bilddaten, der einen Untergrund für das Kraftfahrzeug bzw. das Objekt abbildet, in mehrere Untergrundsegmente unterteilt werden, wobei für jedes der Untergrundsegmente eine zugehörige Bodenebene ermittelt wird. Die Bodenebenen können auf verschiedenen Höhen liegen und/oder gewinkelt zueinander stehen. Alternativ können auch andere Untergrundmodelle genutzt werden. Beispielsweise kann der Untergrund zumindest abschnittsweise durch ein Splines oder durch Polynominalkurven angenähert werden.

Das Untergrundmodell beschreibt erfindungsgemäß mehrere Untergrundebenen. Für jede dieser Untergrundebenen kann beispielsweise ein Stützpunkt angegeben werden, also beispielsweis ein Punkt, der in einem bestimmten Raumwinkel bezüglich des Kraftfahrzeugs liegt und der eine bestimmte Höhe aufweist, und eine Steigung in diesem Punkt, beispielsweise in Fahrzeuglängsrichtung und in Fahrzeugquerrichtung. Das Untergrundmodell kann beispielsweise generiert werden, indem das Kamerabild durch den oder einen weiteren Verarbeitungsalgorithmus verarbeitet wird, der durch mehrere Verarbeitungsparameter parametrisiert wird oder ist, die durch das oder ein Verfahren des Maschinenlernens ermittelt werden oder sind. Der Verarbeitungsalgorithmus kann beispielsweise ein neuronales Netz oder Ähnliches sein. Die Verarbeitungsparameter können, wie obig erläutert, durch ein überwachtes Lernen, insbesondere mit Hilfe von Trainingsdatensätzen, erlernt werden. Beispielsweise können die Trainingsdatensätze zweidimensionale Bilddaten mit zusätzlichen Tiefeninformationen umfassen, die beispielsweise mit Hilfe eines Time-of-Flight-Sensors ermittelt wurden. Da somit die dreidimensionale Lage der einzelnen Bildpunkte bekannt ist, sind zu den einzelnen Bildpunkten Höhen bekannt. Da die einzelnen erfassten Punkte des Untergrunds somit in dreidimensionalen Koordinaten lokalisiert sind, kann im Rahmen des Trainings beispielsweise eine Kostenfunktion minimiert werden, die eine Abweichung des durch den Verarbeitungsalgorithmus generierten Untergrundmodells von den tatsächlichen Punkthöhen berechnet.

Durch ein Maschinenlernen trainierte Verarbeitungsalgorithmen können, wie bereits erläutert, Ähnliches leisten, wie die menschliche Intuition. Für einen menschlichen Betrachter ist es häufig auch bei einer Betrachtung von zweidimensionalen Bilddaten einfach zu erkennen, ob beispielsweise im Bild eine Steigung oder ein Gefälle abgebildet ist. Entsprechend kann auch ein durch Maschinenlernen trainierter Verarbeitungsalgorithmus entsprechende Untergrundverläufe, insbesondere entsprechende Straßenverläufe, erkennen und zumindest näherungsweise in einem Untergrundmodell abbilden. Da somit zumindest näherungsweise bekannt ist, auf welcher Höhe bezüglich des Kraftfahrzeugs sich der in den Bilddaten des Kamerabildes ermittelte Aufstandspunkt befindet, kann aus dessen Pixelposition bzw. aus dem hiermit verknüpften Raumwinkel, in dem sich der Aufstandspunkt bezüglich des Kraftfahrzeugs befindet, mit deutlich erhöhter Genauigkeit eine Entfernung des Aufstandspunkts von dem Kraftfahrzeug ermittelt werden.

Zur Erfassung des Kamerabildes kann eine von mehreren Kameras des Kraftfahrzeugs genutzt werden, wobei über die mehreren Kameras der Nahbereich des Kraftfahrzeugs über den gesamten Umfang des Kraftfahrzeugs, insbesondere in Form eines Top-View-Bildes, abbildbar ist. Hierüber kann zumindest im Nahbereich des Kraftfahrzeugs eine Entfernungsmessung für Objekte im gesamten Umfeld des Kraftfahrzeugs durchgeführt werden. Da Nahbereichskameras häufig eine Weitwinkel- oder Fischaugenoptik aufweisen, die das erfasste Umfeld verzerrt, ist es vorteilhaft, entsprechende Verzerrungen bei der Entfernungsbestimmung zu berücksichtigen. Alternativ oder ergänzend zu den Nahbereichskameras, die das Umfeld des Kraftfahrzeugs abbilden, kann als Kamera im erfindungsgemäßen Verfahren auch eine Frontkamera des Kraftfahrzeugs genutzt werden, die insbesondere dazu dienen kann, Entfernungen von relativ weit entfernten Objekten im Vorfeld des Kraftfahrzeugs zu bestimmen.

Die Segmentierung des Kamerabildes kann erfolgen, indem für jeden Bildpunkt des Kamerabildes eine Bildpunktklasse ermittelt wird, die angibt, ob der jeweilige Bildpunkt das Objekt abbildet. Insbesondere kann für jeden Bildpunkt klassifiziert werden, was dieser abbildet, also ob er beispielsweise das Objekt, ein weiteres Objekt, einen Untergrund des Objekts bzw. des Kraftfahrzeugs oder ein anderes Hintergrundelement abbildet.

Neben dem erfindungsgemäßen Verfahren betrifft die Erfindung ein Kraftfahrzeug mit einer Kamera und einer Verarbeitungseinrichtung, die zur Erfassung eines Kamerabildes über die Kamera und zur Verarbeitung des Kamerabildes gemäß dem erfindungsgemäßen Verfahren zur Ermittlung der Entfernung zu dem Objekt eingerichtet ist. Die zu dem erfindungsgemäßen Verfahren erläuterten Merkmale lassen sich mit den dort genannten Vorteilen auf das erfindungsgemäße Kraftfahrzeug übertragen und umgekehrt.

Das Kraftfahrzeug kann insbesondere ein Fahrerassistenzsystem umfassen, das in Abhängigkeit der ermittelten Entfernung eine Fahrzeugeinrichtung ansteuert, um in den Fahrbetrieb einzugreifen und/oder eine Information an einen Fahrer des Kraftfahrzeugs auszugeben.

Weitere Vorteile und Einzelheiten ergeben sich aus den folgenden Ausführungsbeispielen sowie den zugehörigen Zeichnungen. Hierbei zeigen schematisch:
- Fig. 1: ein Ausführungsbeispiel eines erfindungsgemäßen Kraftfahrzeugs in einer Fahrsituation, in der das erfindungsgemäße Verfahren genutzt wird,
- Fig. 2: ein in der in Fig. 1 gezeigten Fahrsituation erfasstes Kamerabild, das im Rahmen des Ausführungsbeispiels des erfindungsgemäßen Verfahrens ausgewertet wird, und
- Fig. 3: ein Ablaufdiagramm eines Ausführungsbeispiels des erfindungsgemäßen Verfahrens.

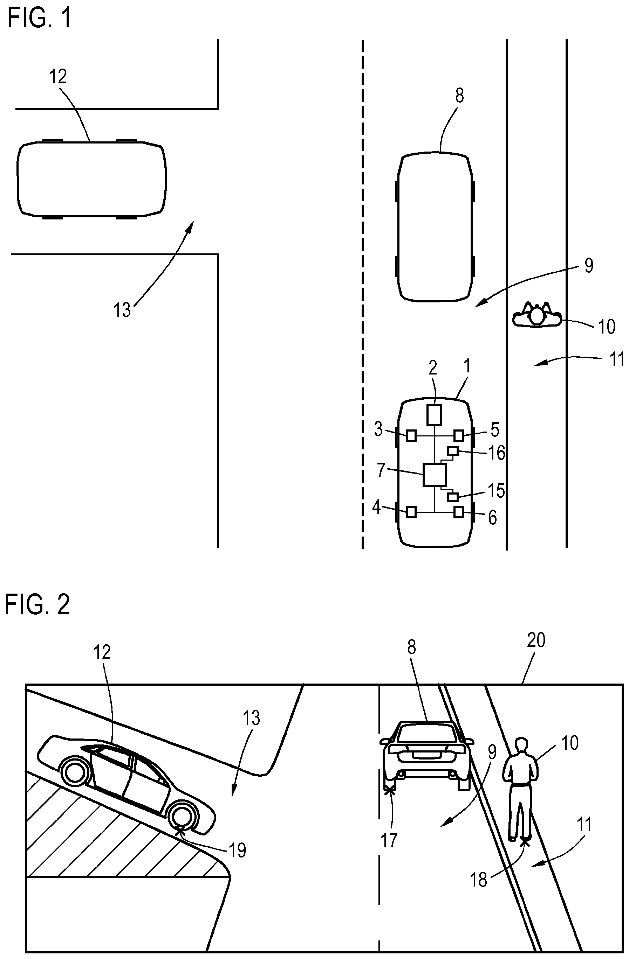

Fig. 1 zeigt ein Kraftfahrzeug 1, das sich entlang einer im Wesentlichen ebenen Fahrbahn 9 bewegt. Das Kraftfahrzeug 1 weist mehrere Kameras 2 - 6 auf, die jeweils zweidimensionale Kamerabilder des Kraftfahrzeugumfelds erfassen können. Im beschriebenen Beispiel soll die vordere Kamera 2, die dazu eingerichtet ist, auch weit entfernte Objekte zu erfassen, genutzt werden, um Entfernungen zu den Objekten 8, 10, 12 zu bestimmen. Das beschriebene Vorgehen lässt sich jedoch auch auf Kamerabilder übertragen, die durch die Kameras 3 - 6 erfasst wurden, die dazu dienen, den Nahbereich des Kraftfahrzeugs 1 über den gesamten Umfang des Kraftfahrzeugs 1, insbesondere in Form eines Top-View-Bildes, abzubilden. Das beschriebene Vorgehen kann somit einerseits dazu genutzt werden, im Nahbereich die Entfernungen zu Objekten in beliebiger Richtung zu ermitteln, und andererseits dazu, Entfernungen von entfernt liegenden Objekten 8, 10, 12 zu ermitteln.

Ein in der in Fig. 1 gezeigten Fahrsituation durch die Verarbeitungseinrichtung 7 über die Kamera 2 erfasstes Kamerabild 20 ist in Fig. 2 dargestellt. Wie aus Fig. 1 und Fig. 2 zu erkennen ist, befindet sich das Objekt 8, also ein Kraftfahrzeug, vor dem eigenen Kraftfahrzeug 1 auf der ebenen Fahrbahn 9. Das Objekt 10, ein Fußgänger, befindet sich auf einem gegenüber der Fahrbahn 9 etwas erhöhten Gehsteig 11. Das Objekt 12, ein weiteres Kraftfahrzeug, bewegt sich über die abschüssige Straße 13 auf die Fahrbahn 9 zu.

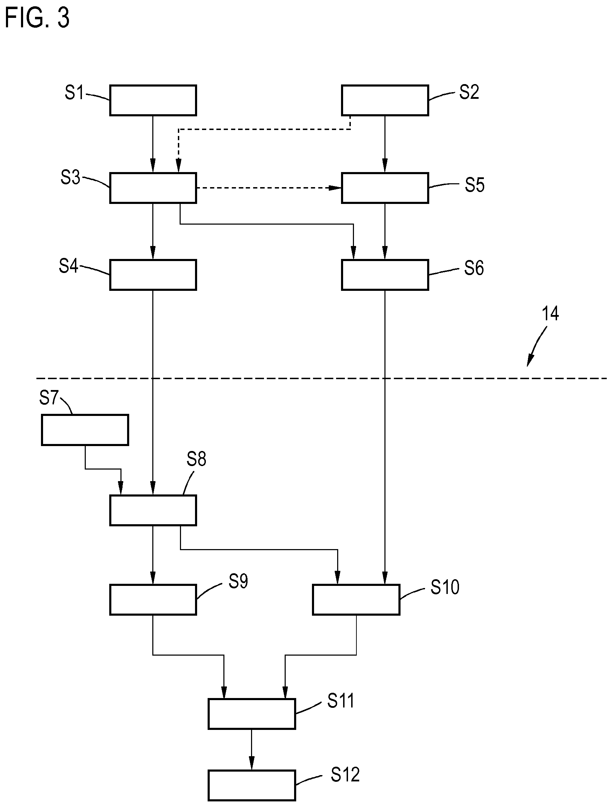

Ein mögliches Vorgehen zur Bestimmung von Entfernungen zwischen dem Kraftfahrzeug 1 und den Objekten 8, 10, 12 wird im Folgenden mit Bezug auf Fig. 3 erläutert. Das Verfahren ist, wie durch die Linie 14 dargestellt ist, in einen vorbereitenden Verfahrensabschnitt, der die Schritte S1 - S6 umfasst, und einen im Kraftfahrzeug 1 ausgeführten Verfahrensabschnitt, der die Schritte S7 - S12 umfasst, aufgeteilt.

Im vorbereitenden Abschnitt werden zwei Verarbeitungsalgorithmen durch Maschinenlernen trainiert, wobei ein erster Verarbeitungsalgorithmus zur Segmentierung des Kamerabildes 20 dient und ein zweiter Verarbeitungsalgorithmus zur Ermittlung eines Untergrundmodells, das einen Höhenverlauf eines abgebildeten Untergrundes zumindest näherungsweise beschreibt. Hierzu werden zunächst mehrere Trainingsdatensätze aufgenommen, wobei jeweils in Schritt S1 zweidimensionale Bilddaten und in Schritt S2 den einzelnen Bildpunkten zugeordnete Entfernungsinformationen erfasst werden. Dies kann beispielsweise mit Hilfe einer Time-of-Flight-Kamera erfolgen. Alternativ könnte beispielsweise eine Kamera zur Aufnahme der zweidimensionalen Bilddaten mit einem Radarsensor oder einem anderen Abstandssensor registriert werden, um zusätzliche Tiefeninformationen zu Bildpunkten oder Bildbereichen zu gewinnen.

In Schritt S3 werden die in Schritt S1 aufgenommenen zweidimensionalen Bilddaten manuell segmentiert, um für die einzelnen Bildpunkte des Kamerabildes 20 festzulegen, ob diese Objekte 8, 10, 12 oder Hintergrundelemente enthalten. Bezüglich des Hintergrundes kann insbesondere zwischen einem Untergrund, auf dem sich die Objekte 8, 10, 12 befinden und anderen Hintergrundobjekten unterschieden werden. Alternativ zu einer manuellen Segmentierung könnte in Schritt S3 auch eine Segmentierung mit Hilfe zusätzlicher Informationen, insbesondere mit Hilfe der in Schritt S2 erfassten Tiefeninformationen, erfolgen.

Mit Hilfe der in Schritt S3 ermittelten segmentierten zweidimensionalen Bilddaten wird in Schritt S4 ein Verarbeitungsalgorithmus zur Segmentierung von Bilddaten durch ein Maschinenlernen trainiert. Der Verarbeitungsalgorithmus weist eine Vielzahl von Verarbeitungsparametern auf, beispielsweise im Falle eines neuronalen Netzwerkes die Gewichte der einzelnen Eingänge für jedes Neuron. Die einzelnen Verarbeitungsparameter können anfangs beispielsweise zufällig gewählt werden. Mit Hilfe der in Schritt S3 bereitgestellten Trainingsdatensätze können die Verarbeitungsparameter nun derart optimiert werden, dass die durch den Verarbeitungsalgorithmus realisierte Segmentierung der Bilddaten möglichst genau der in Schritt S3 vorgegebenen Segmentierung entspricht. Hierbei kann beispielsweise eine Kostenfunktion, die die Abweichung der Segmentierungen voneinander beschreibt, minimiert werden, beispielsweise durch eine sogenannte Fehlerrückführung. Ein entsprechendes Vorgehen ist im Bereich des Maschinenlernens aus anderen Anwendungsbereichen grundsätzlich bekannt und soll daher nicht detailliert erläutert werden.

Um Informationen über einen Höhenverlauf eines Untergrunds gewinnen zu können, wird in den Schritten S5 und S6 ein weiterer Verarbeitungsalgorithmus für diesen Zweck trainiert. Hierzu wird in Schritt S5 zunächst ein Höhenprofil aus den in Schritt S2 ermittelten Entfernungsdaten zumindest für jene Bereiche generiert, die im Schritt S3 als Untergrund identifiziert wurden. Die in Schritt S3 segmentierten Bilddaten sowie das in Schritt S5 berechnete Untergrundprofil bilden gemeinsam einen Trainingsdatensatz für das Training des weiteren Verarbeitungsalgorithmus in Schritt S6. Der Verarbeitungsalgorithmus, der beispielsweise ebenfalls ein neuronales Netzwerk sein kann, wertet als Eingangsgröße segmentierte Bilddaten aus und ermittelt als Ausgangsgröße ein Untergrundmodell, das den Verlauf des Untergrunds beispielsweise in Form von mehreren durch jeweils eine Ebene beschriebenen Untergrundsegmenten beschreiben kann. Zum Training wird, wie vorangehend erläutert, eine Kostenfunktion minimiert, wobei diese in diesem Fall die Abweichung zwischen dem generierten Untergrundmodell und dem in Schritt S5 ermittelten Untergrundprofil über die verschiedenen Trainingsdatensätze summiert.

Die genannten vorbereiteten Schritte können beispielsweise durch einen Fahrzeughersteller oder einen anderen Dienstleistungsanbieter durchgeführt werden und entsprechende Verarbeitungsparameter bzw. mit entsprechenden Verarbeitungsparametern parametrisierte Verarbeitungsalgorithmen können in der Verarbeitungseinrichtung 7 des Kraftfahrzeugs gespeichert sein.

Zur Durchführung des Verfahrens im Kraftfahrzeug wird zunächst durch eine Kamera des Kraftfahrzeugs, beispielsweise die Kamera 2, ein zweidimensionales Kamerabild, beispielsweise das Kamerabild 20, erfasst. In Schritt S8 wird auf das Kamerabild 20 der Verarbeitungsalgorithmus, der vorangehend in Schritt S4 parametrisiert wurde, angewandt, um den einzelnen Bildpunkten des Kamerabildes 20 jeweils eine Bildpunktklasse zuzuordnen, die angibt, ob der jeweilige Bildpunkt das Objekt 8, 10, 12, einen Untergrund, auf dem sich die Objekte 8, 10,12 befinden, oder andere Hintergrundelemente zeigt. Hieraus resultiert eine bildpunktgenaue Segmentierung des Kamerabildes 20.

In Schritt S9 wird anschließend für jedes der erkannten Objekte 8, 10, 12 ein Aufstandspunkt 17, 18, 19 ermittelt. Hierbei wird insbesondere der im Kamerabild 20 tiefstliegende Bildpunkt ausgewählt, der dem jeweiligen Objekt 8, 10,12 zugeordnet ist. Um Verdeckungen zu erkennen, kann hierbei überprüft werden, ob der jeweilige Aufstandspunkt oberhalb eines Bildpunktes liegt, der als Teil des Untergrunds klassifiziert wurde.

In einer vereinfachten Variante des in Fig. 3 gezeigten Verfahrens könnte nun unmittelbar aus dem Aufstandspunkt eine Entfernung des jeweiligen Objekts 8, 10, 12 ermittelt werden. Jeder Bildpunkt des Kamerabildes 20 ist durch die bekannte Erfassungsgeometrie der Kamera 2 einem definierten Raumwinkel zugeordnet. Insbesondere unter Berücksichtigung eines Nick- und Wankwinkels des Kraftfahrzeugs 1 kann unter der Annahme, dass der Untergrund des Kraftfahrzeugs 1 als Ebene angenähert werden kann, den einzelnen Raumwinkeln und somit den einzelnen Bildpunkten des Kamerabi-Ides 20 eine jeweilige Entfernung zugeordnet werden. Für das Objekt 8, das sich näherungsweise auf einer solchen Ebene befindet, würde bereits in diesem Fall eine korrekte Entfernung ermittelt. Für die Objekte 10, 12, die sich oberhalb dieser Ebene befinden, bzw. für nicht gezeigte Objekte, die sich unterhalb der Ebene befinden, würde jedoch eine zu große bzw. zu kleine Entfernung ermittelt.

Um eine genauere Entfernungsbestimmung zu ermöglichen, wird die im Schritt S6 parametrisierte weitere Verarbeitungsfunktion in Schritt S10 genutzt, um aus den in Schritt S8 segmentierte Bilddaten ein Untergrundmodell zu generieren, das zumindest näherungsweise den Höhenverlauf des Untergrunds beschreibt. Das Untergrundmodell kann hierbei insbesondere durch mehrere auf verschiedenen Höhen liegende bzw. gewinkelt zueinander stehende Ebenen beschrieben werden. Beispielsweise kann der Gehsteig 11 einer Ebene zugeordnet werden, die geringfügig oberhalb der Ebene der Fahrbahn 9 liegt und die abschüssige Straße 13 kann einer Ebene zugeordnet werden, die gewinkelt zu der Ebene der Fahrbahn 9 steht. Durch einfache geometrische Berechnungen kann der Schnittpunkt eines dem einzelnen Bildpunkt zugeordneten Raumwinkels mit der entsprechenden Ebene berechnet und hieraus in Schritt S11 die Entfernung zu dem jeweiligen Aufstandspunkt 17, 18, 19 berechnet werden.

In Abhängigkeit der in Schritt S11 berechneten Entfernungen zu den einzelnen Objekten 8, 10, 12 kann in Schritt S12 eine Fahrzeugeinrichtung 15, 16 angesteuert werden. Die Fahrzeugeinrichtung 15 kann beispielsweise ein Bremssystem sein, die ein automatisches Abbremsen des Kraftfahrzeugs 1 bei einer Kollisionsgefahr ermöglicht. Die Fahrzeugeinrichtung 16 kann eine Hinweiseinrichtung, beispielsweise ein Display, sein, die den Fahrer beispielsweise über Abstände zu Fahrzeugen informieren oder ihn auf Kollisionsgefahren hinweisen kann.

## Patentansprüche

1. Verfahren zur Ermittlung einer Entfernung zwischen einem Kraftfahrzeug (1) und wenigstens einem Objekt (8, 10, 12), wobei genau ein Kamerabild genau einer Kamera verwendet wird, umfassend die Schritte:
- Erfassen eines zweidimensionalen Kamerabildes (20) durch eine Kamera (2 - 6) des Kraftfahrzeugs (1),
- Segmentieren des Kamerabildes (20), wobei jene Bildpunkte, die das Objekt (8, 10, 12) abbilden, als Objektsegment ermittelt werden,
- Ermitteln eines Aufstandspunkts (17, 18, 19) des Objekts (8, 10, 12) auf einem Untergrund in Abhängigkeit des Objektsegments,
- Ermitteln der Entfernung zwischen Objekt (8, 10, 12) und Kraftfahrzeug (1) in Abhängigkeit des Aufstandspunkts (17, 18, 19) und einer Erfassungsgeometrie der Kamera (2 - 6),
wobei durch einen Verarbeitungsalgorithmus aus den segmentierten Bilddaten des Kamerabildes (20) ein Untergrundmodell generiert wird, das einen Höhenverlauf zumindest innerhalb eines Untergrundsegments betrifft, das Bildpunkte umfasst, die den Untergrund des Objekts (8, 10, 12) abbilden, wobei der Aufstandspunkt (17, 18, 19) und/oder die Entfernung in Abhängigkeit des Untergrundmodells ermittelt wird, wobei das Untergrundmodell mehrere Untergrundebenen beschreibt, wobei der Verarbeitungsalgorithmus durch mehrere Verarbeitungsparameter parametrisiert wird oder ist, die durch ein Verfahren des Maschinenlernens ermittelt werden oder sind.

2. Verfahren nach Anspruch 1,
**dadurch gekennzeichnet,**
**dass** das Kamerabild (20) durch einen weiteren Verarbeitungsalgorithmus segmentiert wird, der durch mehrere Verarbeitungsparameter parametrisiert wird oder ist, die durch das oder ein Verfahren des Maschinenlernens ermittelt werden oder sind.

3. Verfahren nach Anspruch 2,
**dadurch gekennzeichnet,**
**dass** ein neuronales Netz als der Verarbeitungsalgorithmus und/oder ein neuronales Netz als der weitere Verarbeitungsalgorithmus genutzt wird.

4. Verfahren nach einem der vorangehenden Ansprüche,
**dadurch gekennzeichnet,**
**dass** zur Erfassung des Kamerabildes (20) eine von mehreren Kameras (2 - 6) des Kraftfahrzeugs (1) genutzt wird, wobei über die mehreren Kameras (2 - 6) der Nahbereich des Kraftfahrzeugs (1) über den gesamten Umfang des Kraftfahrzeugs (1), insbesondere in Form eines Top-View-Bildes, abbildbar ist.

5. Verfahren nach einem der vorangehenden Ansprüche,
**dadurch gekennzeichnet,**
**dass** die Segmentierung des Kamerabildes (20) erfolgt, indem für jeden Bildpunkt des Kamerabildes (20) eine Bildpunktklasse ermittelt wird, die angibt, ob der jeweilige Bildpunkt das Objekt (8, 10, 12) abbildet.

6. Kraftfahrzeug mit einer Kamera (2 - 6),
**dadurch gekennzeichnet,**
**dass** es eine Verarbeitungseinrichtung (7) umfasst, die zur Erfassung eines Kamerabildes (20) über die Kamera (2 - 6) und zur Verarbeitung des Kamerabildes (20) gemäß dem Verfahren nach einem der vorangehenden Ansprüche zur Ermittlung der Entfernung zu dem Objekt (8, 10, 12) eingerichtet ist.

## Claims

1. Method for determining a distance between a motor vehicle (1) and at least one object (8, 10, 12), wherein exactly one camera image of exactly one camera is used, comprising the following steps:
- detecting a two-dimensional camera image (20) by a camera (2 - 6) of the motor vehicle (1),
- segmenting the camera image (20), wherein those pixels which image the object (8, 10, 12) are determined as an object segment,
- determining a contact point (17, 18, 19) of the object (8, 10, 12) on a base as a function of the object segment,
- determining the distance between the object (8, 10, 12) and the motor vehicle (1) as a function of the contact point (17, 18, 19) and a detection geometry of the camera (2 - 6),
wherein a base model is generated from the segmented image data of the camera image (20) by a processing algorithm, which base model relates to a height profile at least within a base segment which comprises pixels which image the base of the object (8, 10, 12), wherein the contact point (17, 18, 19) and/or the distance is determined as a function of the base model, wherein the base model describes a plurality of base planes, wherein the processing algorithm is or has been parameterised by a plurality of processing parameters which are or have been determined by a machine learning method.

2. Method according to claim 1,
**characterised in that**:
the camera image (20) is segmented by a further processing algorithm which is or has been parameterised by a plurality of processing parameters which are or have been determined by the or a machine learning method.

3. Method according to claim 2,
**characterised in that**:
a neural network is used as the processing algorithm and/or a neural network is used as the further processing algorithm.

4. Method according to any one of the preceding claims,
**characterised in that**:
one of a plurality of cameras (2 - 6) of the motor vehicle (1) is used for detecting the camera image (20), wherein the close range of the motor vehicle (1) can be imaged over the entire circumference of the motor vehicle (1) by means of the plurality of cameras (2 - 6), in particular in the form of a top-view image.

5. Method according to any one of the preceding claims,
**characterised in that**:
the segmentation of the camera image (20) takes place by a pixel class being determined for each pixel of the camera image (20), which pixel class indicates whether the respective pixel images the object (8, 10, 12).

6. Motor vehicle having a camera (2 - 6),
**characterised in that**:
it comprises a processing device (7) which is designed to detect a camera image (20) via the camera (2 - 6) and to process the camera image (20) according to the method according to any one of the preceding claims in order to determine the distance to the object (8, 10, 12).

## Revendications

1. Procédé destiné à déterminer une distance entre un véhicule à moteur (1) et au moins un objet (8, 10, 12), dans lequel exactement une image de caméra d'exactement une caméra est utilisée, comprenant les étapes suivantes :
- acquisition d'une image de caméra bidimensionnelle (20) par une caméra (2-6) du véhicule à moteur (1),
- segmentation de l'image de caméra (20), dans lequel les pixels qui représentent l'objet (8, 10, 12) sont déterminés en tant que segment d'objet,
- détermination d'un point d'appui (17, 18, 19) de l'objet (8, 10, 12) sur un arrière-plan en fonction du segment d'objet,
- détermination de la distance entre l'objet (8, 10, 12) et le véhicule à moteur (1) en fonction du point d'appui (17, 18, 19) et d'une géométrie d'acquisition de la caméra (2-6),
dans lequel un modèle d'arrière-plan est généré par un algorithme de traitement à partir des données d'image segmentées de l'image de caméra (20), modèle qui concerne un profil altimétrique au moins au sein d'un segment d'arrière-plan qui comprend des pixels qui représentent l'arrière-plan de l'objet (8, 10, 12), dans lequel le point d'appui (17, 18, 19) et/ou la distance sont déterminés en fonction du modèle d'arrière-plan, dans lequel le modèle d'arrière-plan décrit plusieurs niveaux d'arrière-plan, dans lequel l'algorithme de traitement est paramétré par plusieurs paramètres de traitement qui sont déterminés par un procédé d'apprentissage automatique.

2. Procédé selon la revendication 1,
**caractérisé en ce que**
l'image de caméra (20) est segmentée par un algorithme de traitement supplémentaire qui est paramétré par plusieurs paramètres de traitement qui sont déterminés par le ou un procédé d'apprentissage automatique.

3. Procédé selon la revendication 2,
**caractérisé en ce que**
un réseau neuronal est utilisé en tant qu'algorithme de traitement et/ou un réseau neuronal est utilisé en tant qu'autre algorithme de traitement.

4. Procédé selon l'une quelconque des revendications précédentes,
**caractérisé en ce que**
une de plusieurs caméras (2-6) du véhicule à moteur (1) est utilisée pour l'acquisition de l'image de caméra (20), dans lequel la zone proche du véhicule à moteur (1) peut être représentée par l'intermédiaire de la pluralité de caméras (2-6) sur tout le pourtour du véhicule à moteur (1), en particulier sous la forme d'une image vue de dessus.

5. Procédé selon l'une quelconque des revendications précédentes,
**caractérisé en ce que**
la segmentation de l'image de caméra (20) est effectuée en déterminant pour chaque pixel de l'image de caméra (20) une classe de pixels qui indique si le pixel respectif représente l'objet (8, 10, 12).

6. Véhicule à moteur avec une caméra (2-6),
**caractérisé en ce que**
il comprend un appareil de traitement (7) qui est configuré pour l'acquisition d'une image de caméra (20) par l'intermédiaire de la caméra (2-6) et pour le traitement de l'image de caméra (20) selon le procédé selon l'une quelconque des revendications précédentes pour la détermination de la distance par rapport à l'objet (8, 10, 12).
